Europäisches Patentamt

European Patent Office

Office européen des brevets

(19)

(11) EP 1 542 385 A2

## (12) EUROPEAN PATENT APPLICATION

(43) Date of publication:
15.06.2005 Bulletin 2005/24

(51) Int Cl.$^7$: H04L 1/00

(21) Application number: 04257641.3

(22) Date of filing: 08.12.2004

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 09.12.2003 US 528171 P
24.09.2004 US 949444

(71) Applicant: Agere Systems, Inc.
Allentown, PA 18109 (US)

(72) Inventors:
• Giesberts, Dieter-Paul Severin
3581 KR Utrecht (NL)
• Schenk, Tim
5611 HL Eindhoven (NL)

(74) Representative: Williams, David John et al
Page White & Farrer,
54 Doughty Street
London WC1N 2LS (GB)

(54) **Method and apparatus for automatic data rate control using channel correlation in a wireless communication system**

(57) A method and apparatus are provided for automatic data rate control in wireless communication systems, such as wireless LANs. A wireless communication device according to the present invention includes a data rate controller that adapts a transmission rate based on a channel correlation measure. The channel correlation measure may be, for example, eigenvalues or singular values of a channel matrix. The data rate controller may also consider the signal quality, channel delay spread or both in determining a data rate.

*FIG. 6*

EP 1 542 385 A2

## Description

### Cross-Reference to Related Applications

The present application claims priority to United States Provisional Patent Application Serial Number 60/528,171, filed December 9, 2003, incorporated by reference herein.

### Field of the Invention

The present invention relates generally to wireless communication systems, such as wireless local area networks (LANs), and more particularly, to data rate control techniques in such wireless communication systems.

### Background of the Invention

Wireless communications can generally be made more reliable by increasing the power level of the transmitter or by decreasing the transmission data rate to a more robust data rate. The transmit power levels, however, are typically limited by regulations and design constraints of the wireless devices. For example, most countries or regions have regulations that specify particular power level limits for each frequency band. In addition, design constraints generally limit the cost, size and power consumption of wireless devices.

A number of standards have been implemented or proposed that describe a set of minimum requirements that a wireless device must support in order to be compliant with the standard. In order to meet a given standard, such as the IEEE 802.11 standard and the various extensions to the 802.11 standard or the HIPERLAN/2 Standard in Europe, a particular wireless device must support, among other requirements, the set of mandatory data rates. The selection of a particular available data rate by a given wireless device, however, is outside the scope of the standards. In general, there is an inverse relationship between the selection of a transmit power level and a corresponding transmission data rate. In addition, for a number of modulation schemes, higher data rates also require greater linearity in the power amplifier. Thus, to increase the transmit data rate, for example, there generally must be a corresponding decrease in the transmit power level. Likewise, to increase the transmit power level, there generally must be a corresponding decrease in the transmit data rate.

United States Patent Application Serial No. 10/745,883, filed December 26, 2003, entitled "Method and Apparatus for Automatic Data Rate Control in a Wireless Communication System," incorporated by reference herein, discloses a data rate controller that selects a transmission rate for transmitted data based on a signal quality and a transmit power level. The disclosed data rate controller can adapt the transmission rate based on data rate advice that will decrease a data rate if a current signal quality is below a minimum required signal quality for a given data rate and increase a data rate if a current signal quality is above a minimum required signal quality for a given data rate.

A need exists for an improved method and apparatus for automatic data rate control in wireless communication systems, such as wireless LANs.

### Summary of the Invention

Generally, a method and apparatus are provided for automatic data rate control in wireless communication systems, such as wireless LANs. A wireless communication device according to the present invention includes a data rate controller that adapts a transmission rate based on a channel correlation measure. The channel correlation measure may be, for example, eigenvalues or singular values of a channel matrix. The data rate controller may also consider the signal quality, channel delay spread or both in determining a data rate.

A more complete understanding of the present invention, as well as further features and advantages of the present invention, will be obtained by reference to the following detailed description and drawings.

### Brief Description of the Drawings

FIG. 1 illustrates a wireless network environment in which the present invention can operate;

FIG. 2 is a schematic block diagram of an exemplary station of FIG. 1 incorporating features of the present invention;

FIG. 3 is a schematic block diagram of an exemplary transmitter/receiver station incorporating features of the present invention;

FIG. 4 illustrates the influence of signal-to-noise ratio (SNR) and channel correlation on the performance of a MIMO based OFDM wireless device;

FIG. 5 illustrates bit error rate performance as function of SNR for an exemplary two transmitter and two receiver (2x2) configuration with a correlation, p, equal to 0;

FIG. 6 is a schematic block diagram of an automatic data rate controller of FIG. 3 incorporating features of the present invention;

FIG. 7 is a sample table describing an exemplary data rate table that can be used by the rate advisor of FIG. 6;

FIG. 8 illustrates a maximum throughput of a system applying rate selection without correlation; and

FIG. 9 illustrates a maximum throughput of a system applying rate selection for a correlation, p, equal to 0.8.

## Detailed Description

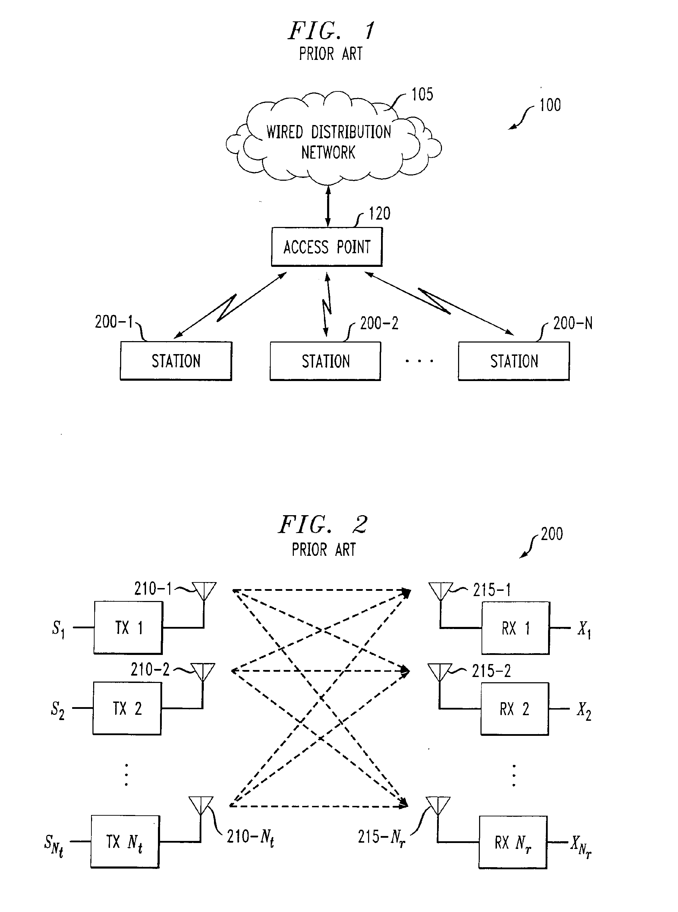

FIG. 1 illustrates a wireless network environment 100 in which the present invention can operate. The wireless network environment 100 may be, for example, a wireless LAN or a portion thereof. As shown in FIG. 1, a number of stations 200-1 through 200-N, collectively referred to as stations 200 and discussed below in conjunction with FIG. 2, communicate over one or more wireless channels in the wireless digital communication system 100. An access point 120 is typically connected to a wired distribution network 105 with other access points (not shown). The access point 120 typically provides control and management functions, in a known manner. In addition, the access point 120 acts as a central node through which all traffic is relayed so that the stations 200 can rely on the fact that transmissions will originate from the access point 120. The wireless network environment 100 may be implemented, for example, in accordance with the IEEE 802.11 standard or the various extensions to the 802.11 standard, such as 802.11a, b and g, or the HIPERLAN/2 standard.

The IEEE 802.11 protocol specifies that all communications are relayed via the access point 120, so each transmission that is of interest (other access points 120 may be active on the same radio channel) is from the access point 120 the stations 200 is associated with. An example of such a communications protocol is the Enhanced Service Set (ESS) mode of the IEEE 802.11 protocol, in which stations 200 are associated with an access point 120 that relays all communication.

The access point 120 and wireless stations 200 exchange frames containing information on the transmit power level limits. At the access point 120, the country information is available once the network administrator has configured the access point 120 for country selection. A station 200 receives the information from its access point 120. The frame format for exchanging transmit power level limits is described, for example, in IEEE, "Supplement to Standard for Telecommunications and Information Exchange Between Systems-LAN/MAN Specific Requirements- Part 11: Wireless MAC and PHY Specifications: Spectrum and Transmit Power Management Extensions in the 5 GHz band in Europe," P802.11h/D2.0 (March 2002).

FIG. 2 illustrates an exemplary conventional MIMO environment in which the present invention can operate. As shown in FIG. 2, an exemplary conventional MIMO system 200 comprises source signals $S_1$ to $S_{Nt}$, transmitters $TX_1$ to $TX_{Nt}$, transmit antennas 210-1 through 210-$N_t$, receive antennas 215-1 through 215-$N_r$, and receivers $RX_1$ to $RX_{Nr}$. The MIMO system 200 transmits separate data streams on the multiple transmit antennas 210, and each receiver RX receives a combination of these data streams.

As used herein, the term "MIMO" shall mean a system in which there are multiple transmission layers, i.e., several distinguishable streams are transmitted from different antennas into the same frequency channel. It is noted that there could be one or more receive antennas in various configurations to receive such a MIMO transmission. In typical implementations for rate enhancement, there will be as many receive antennas as transmit antennas, or more receive antennas than transmit antennas.

The performance of MIMO systems relies on the provided scattering in the wireless channel. The present invention recognizes that when this scattering is poor and the correlation (i.e., spatial channel correlation) between the various channel elements exceeds a predefined threshold, the system is not able to increase the data rate using the multiple antennas. The scattering depends on the surrounding environment of both the transmitter and the receiver (or access point (AP) and station (STA)).

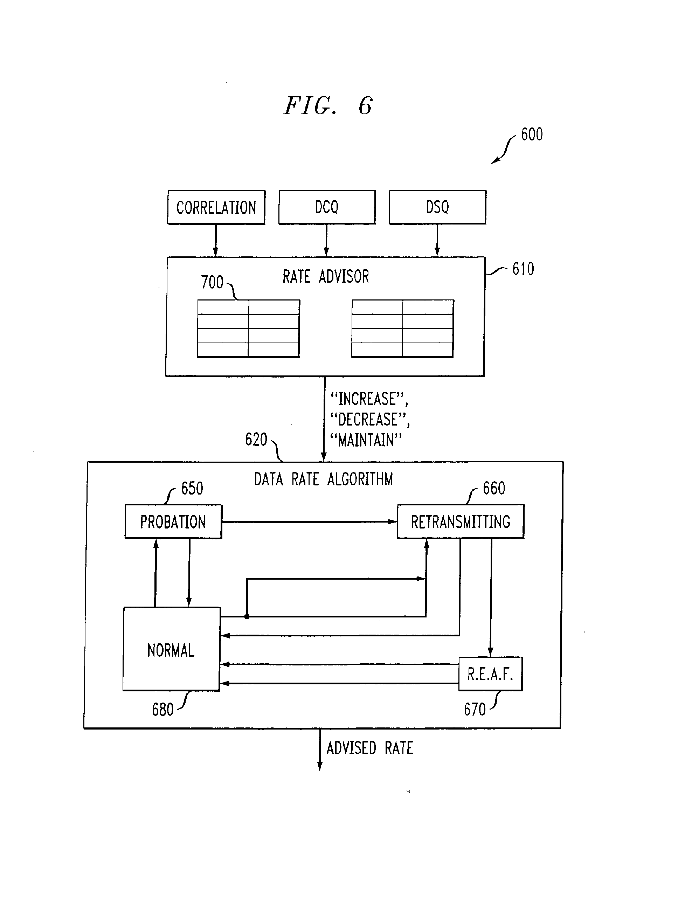

According to one aspect of the invention, an automatic data rate controller 600, discussed below in conjunction with FIG. 6, provides an automatic data rate control function that includes a data rate advisor 610 that is a function of the correlation, channel delay spread and the signal quality (e.g., expressed in SNR or in constellation error vector).

Correlation Principles

As previously indicated, the data rate advisor 610 selects a data rate based on the correlation between the stations. One measure for the correlation is the set of eigenvalues corresponding to the MIMO channel, which can be estimated from the channel response. In addition, the performance of a MIMO link also relies heavily on the signal-to-noise-ratio (SNR). The SNR can be estimated from the preamble of the packet or from previously received packets. This estimation of the MIMO channel is in all cases necessary to do successful recovery of transmitted data. Another measure for the quality of a link is the percentage of packets that are transmitted and received by their destinations with or without errors, which can, for example, be determined from the number of missed or received acknowledgements, respectively.

The present invention tries to maximize the rate provided to individual stations in WLAN networks containing stations or access points with multiple antennas. This is achieved by choosing the most favorable transmission characteristics (e.g., modulation size, coding rate and number of independent datastreams), using the SNR, channel delay spread channel correlation and percentage of erroneous received packets.

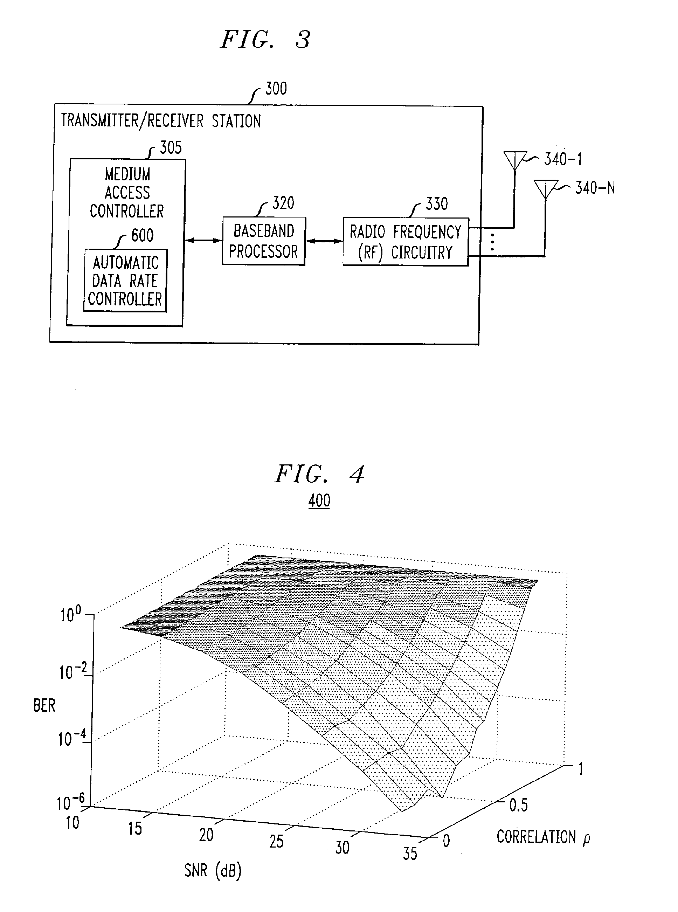

FIG. 3 is a schematic block diagram of an exemplary transmitter/receiver station 300 (or alternatively, an access point 120) incorporating features of the present invention. It is thus noted that the transmit data rate control aspects of the present invention can be applied in both stations 300 and access points 120. The stations 300 may each be embodied, for example, as personal computer devices, or any device having a wireless communication capability, such as a cellular telephone, personal digital assistant or pager, as modified herein to provide the features and functions of the present invention.

As shown in FIG. 4, an exemplary station 300 includes an automatic data rate controller 600, discussed further below in conjunction with FIG. 6. In addition, a transmitter/receiver 300 includes a Medium Access Controller (MAC) 305 that controls the transmission of data. In the exemplary embodiment, the MAC 305 includes the automatic data rate controller 600. In an alternate implementation, the automatic data rate controller 600 can be a separate device that interacts with the MAC 305. Generally, the automatic data rate controller 600 determines the rate and modulation to be used by the baseband processor 320. The baseband processor 320 provides the signal to the RF circuitry 430, which in turn, provides the signal to one or more antennas 340-1 through 340-N, in a known manner.

FIG. 4 illustrates the influence of the SNR and channel correlation on the performance of a MIMO based OFDM wireless device. FIG. 4 illustrates the bit-error-rate (BER) performance 400 of a two transmitter and two receiver (2x2) extension of an IEEE 802.11a system. The exemplary system uses 64 QAM modulation, a coding rate of 0.75, yielding a data rate of 108 (2 x 54) Mbps. The correlation in the MIMO channel is modeled as described in A. van Zelst and J.S. Hammerschmidt, "A Single Coefficient Spatial Correlation Model for Multiple-Input Multiple-Output (MIMO) Radio Channels," Proc. URSI XXVII General Assembly, 17-24 August 2002, 1-4 (2002).

Here, $\rho$ is the parameter modeling the correlation, varying from 0 to 1. In particular, $\rho$ equal to 0 corresponds to fully uncorrelated while $\rho$ equal to 1 corresponds to fully correlated. A Rayleigh faded exponential decaying power-delay-profile is applied. Generally, as shown in FIG. 4, the performance increases (i.e., the BER decreases) when the SNR increases and the performance decreases when the correlation factor increases.

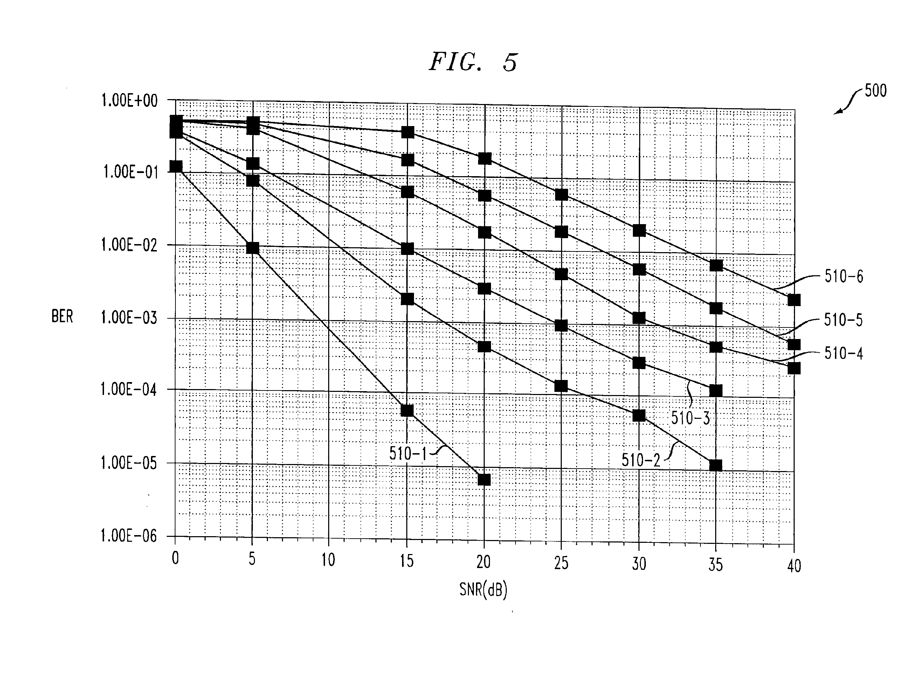

FIG. 5 illustrates the BER performance 500 as function of the SNR for a two transmitter and two receiver (2x2) configuration with a correlation, $\rho$, equal to 0. The different data rates 510-1 through 510-6 correspond to rates of 12, 24, 48, 72, 108 Mbps, respectively. The different rates 510-1 through 510-6 are achieved by varying the coding rate and modulation (as also done in 802.11a/g). As shown in FIG. 5, the BER performance is a function of the SNR and data rate. If the receiver is operating at a certain SNR, the data rate can be chosen which achieves the required BER performance. FIG. 5 demonstrates the influence of the modulation and coding rate on the BER performance and SNR requirements.

Illustrative Performance Parameter Estimation

Signal-to-Noise-Ratio (SNR)

The SNR of the wireless channels with the other terminals can be estimated by using the preamble of received packets. This can be done using the Long Training (LT) symbols in the preamble of any received packet. The long training symbols, for example, as proposed in IEEE Std 802.11a, High-speed Physical Layer in the 5 GHz Band (1999), are a repetition of a symbol and a cyclic prefix. After synchronization, the only difference between the two versions of the training symbols is the noise. Thus, subtracting the two symbols gives an estimate of the noise.

Another, more accurate way, to measure the SNR is using the detected data in the packet(s). From constellation points estimates, using, for example, a Least Squares estimation, the detected constellation points after slicing are subtracted. The result is the error in the estimation, of which the statistics relate to the ratio between the signal and noise level. Another technique for measuring the SNR is to measure the received energy level during packet reception (signal level) and during idle periods on the channel (noise level). A number for the SNR is achieved by subtracting the two values.

These parameters or a running average over several packets can be stored in a table, to be used in the enhanced data rate selection, as discussed further below.

Channel Correlation

The channel correlation, or MIMO correlation, can be estimated from the MIMO channel matrix **H**. Estimates of the channel are in all cases necessary for systems using coherent detection. There are several proposed measures for this correlation, such as effective degrees of freedom (EDOF) and effective dimensions (ED). These measures are all used to determine how many independent streams of data can be transmitted over the channel.

The present invention proposes to calculate the eigenvalues (EVs) or Singular Values (SV) of the channel matrix. This can be calculated using a singular value decomposition (SVD). In a fully uncorrelated MIMO channel, these EVs all will have the same value and will be high. In a correlated channel, some EVs will be lower. A good measure for the correlation is thus the maximum value of EVs and the ratio between them.

Balance Between the Number of Received and Missed ACKs

The balance between the number of received and missed ACKs can also be calculated. This measure stores the number of received and missed acknowledgements. The number of packets that are used to compute this statistic can be based on all ACKs related to packets transmitted at a given data rate, or the last X packets at a given data rate.

## Data Rate Adaptation Based on Channel Correlation

FIG. 6 is a schematic block diagram of an automatic data rate controller 600 incorporating features of the present invention. The automatic data rate controller 600 may be embodied using the techniques described in United States Patent Application Serial No. 10/745,883, filed December 26, 2003, entitled "Method and Apparatus for Automatic Data Rate Control in a Wireless Communication System," incorporated by reference herein, as modified herein to incorporate the features and functions of the present invention.

Generally, the automatic data rate controller 600 provides rate control adaptation based on information from a data rate advisor 610. As discussed further below, the data rate advisor 610 uses signal quality information received from the baseband processor. The signal quality is derived from the received signal strength and the noise level as measured during a silence period by some averaging, or derived from the received EVM (error vector magnitude, as described in the 802.11 a standard). According to one aspect of the invention, the automatic data rate controller 600 also considers the channel correlation of the link to select the optimal transmission scheme.

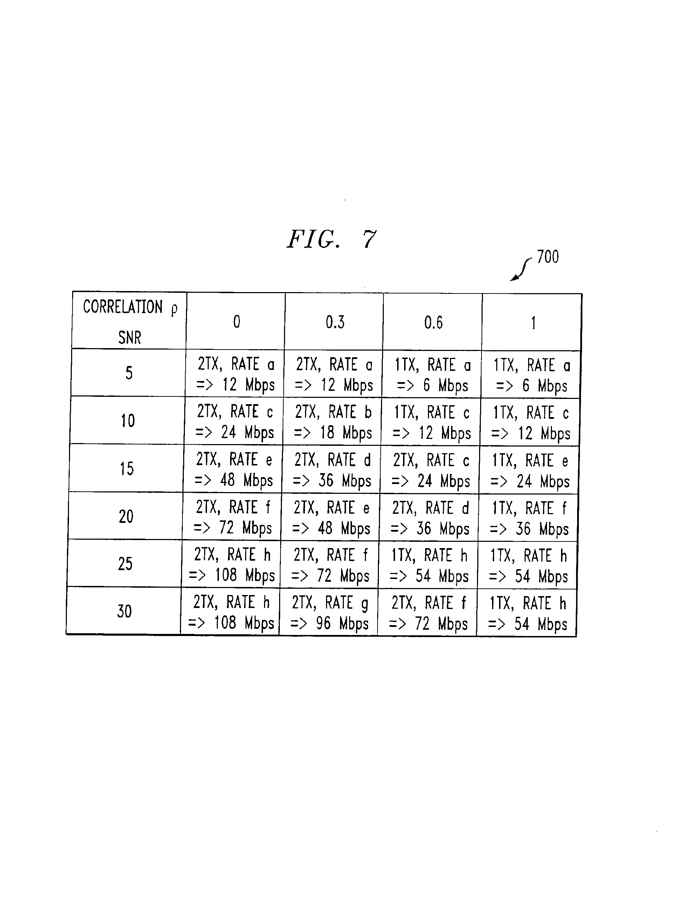

As shown in FIG. 6, the automatic data rate controller 600 includes a data rate advisor 610 and a data rate algorithm 620. The exemplary data rate advisor 610 uses a lookup table 700, discussed below in conjunction with FIG. 7, to generate rate advice. Generally, the lookup table 700 provides an appropriate transmission mode (modulation type, constellation size and coding rate) to use for a given SNR and correlation.

A station can monitor the quality of its link to the AP (for example, in Infrastructure Basic Service Set (BSS) mode), by observing the SNR and the number of missed acknowledgements (ACKs) (i.e., the balance between the number of received and missed ACKs). This number of missed ACKs directly relates to the number of erroneous received packets. This link quality is then used to determine the data rate, i.e., modulation type, constellation size and coding rate, that the station should use for communication, through a data rate selection algorithm. Likewise, an access point monitors the links to all associated stations and selects for each an optimum data rate. Also, in Independent Basic Service Set (IBSS) mode, every station gathers information about the links to all other stations that it communicates with and selects for each the optimum data rate.

As shown in FIG. 6, the automatic data rate controller 600 comprises two interoperating objects, a Rate Advisor object 610, and a Data Rate Algorithm object 620. The exemplary rate advisor 610 determines an optimal rate based on a DCQ (Datarate Communications Quality) or DSQ (Datarate Signal Quality) (or both) for the link. The DCQ value is an SNR indication, based on signal and noise level readings from the modem. The DSQ value is also an indication of SNR, but based OFDM constellation errors. The Rate Advisor objects uses a predetermined table 700 to map signal quality values to an optimum datarate and gives advice on whether to decrease, maintain, or increase the datarate to the Data Rate Algorithm object 620.

The data rate algorithm object 620 uses the advice from the advisor 610 to select a data rate for the current data frame transmission. In the case of missed ACKs, the data rate algorithm 620 can temporarily lower the data rate for the next retransmission, in order to increase the possibility of delivering the current frame before its end of life timer expires. Furthermore, the data rate algorithm 620 may increase the data rate if the history of delivered frames (i.e.. few, if any, lost ACKs) indicates that the wireless link performs better than the Rate Advisor 610 thinks, based on the values of DCQ and DSQ.

FIG. 6 illustrates the transitions between the various states of the data rate algorithm 620. The exemplary data rate algorithm 620 includes four states, as follows:

> a normal operation state 650, where the station 300 is normally operating;
> a probation state 660, where the station 300 is trying to transmit one frame at a higher data rate;
> a retransmitting state 670, where the station 300 is retransmitting a frame that has missed its ACK at the same data rate; and
> a retry expiry avoidance fallback state 680, where the station is retransmitting a frame that has missed its ACK at data rates that are lower with each missed ACK, to optimize the probability that eventually the frame will be acknowledged. For a more detailed discussion of the data rate algorithm 720, see, United States Patent Application Serial No. 10/745,883, filed December 26, 2003.

The present invention recognizes that for MIMO systems, the data rate selection algorithm 620 can be improved by using not only the current link information, but also the channel correlation of the link to select the optimal transmission scheme. In other words, the number of antennas that transmit independent data streams, modulation type, constellation size, coding rate, is based on the SNR, the balance of missed/received ACKs and the correlation of the channel matrix. Thus, as shown in FIG. 6, correlation information is added as an input to the data rate advisor 610. As discussed further below in conjunction with FIG. 7, the rate advisor 610 can use a combination of the channel correlation together with the current link information (DCQ and/or DSQ values), to select the optimum number of independent data streams (i.e., independent antennas), and which modulation type and coding to employ, such as the exact data rate, for each of those streams. Both decisions can be based on one or more predetermined tables 700 that map correlation and DCQ/DSQ to the number of data streams, and DCQ/DSQ to the data rate to be used on those streams.

FIG. 7 is a sample table describing an exemplary data rate table 700 that can be used by the rate advisor 610 of FIG. 6 for an exemplary system having two transmitter (TX) branches and applying (per antenna) rates $\alpha$ to $h$ by varying in modulation depth and coding rate. For example, the exemplary system can employ the following illustrative rates a to h:

Rate a: BPSK, rate ½ coding = 6 Mbps
Rate b: BPSK, rate ¾ coding = 9 Mbps
Rate c: QPSK, rate ½ coding = 12 Mbps
Rate d: QPSK, rate ¾ coding = 18 Mbps
Rate e: 16QAM, rate ½ coding = 24 Mbps
Rate f: 16QAM, rate ¾ coding = 36 Mbps
Rate g: 64QAM, rate 2/3 coding = 48 Mbps
Rate h: 64QAM, rate % coding = 54 Mbps

The table 700 shows the advised data rate for a certain SNR and correlation pair. This rate is composed of the number of transmit branches to use and the advised modulation/coding rate combination.

It is noted that a correlation of 0 refers to the case of no spatial correlation and a correlation of 1 refers to the case of fully correlated signals. For a two-transmitter two-receiver system, the correlation matrix is given by:

$$\text{correlation}\left\{\mathbf{H}\right\} = E\left\{\mathbf{H}\mathbf{H}^H\right\} = \begin{bmatrix} 1 & \rho \\ \rho & 1 \end{bmatrix}$$

where $\rho$ denotes the correlation measure as shown in the table and $\mathbf{H}$ is the channel matrix.

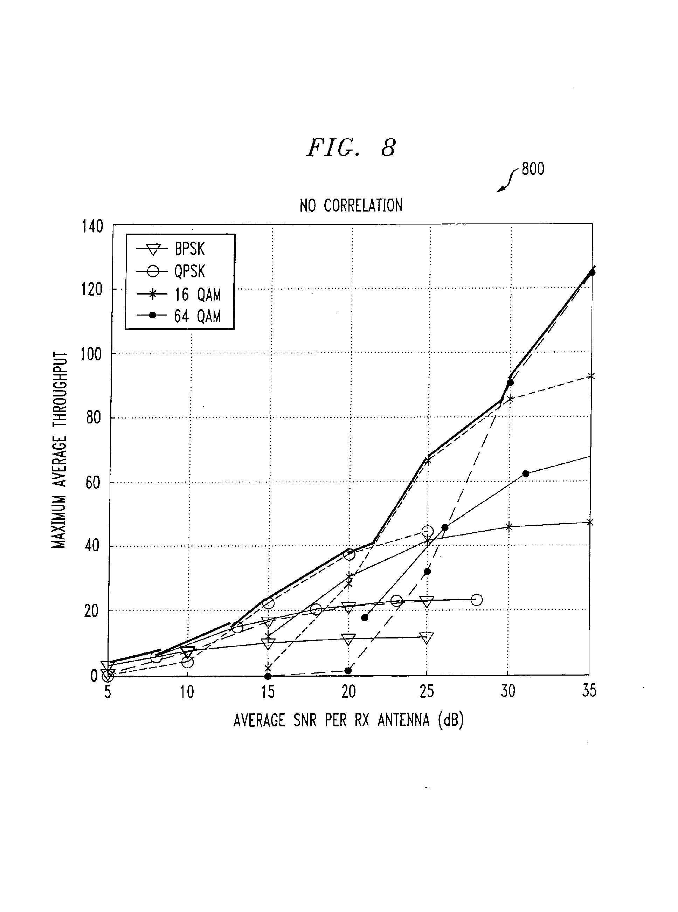

FIG. 8 illustrates a maximum throughput of a system applying rate selection for no correlation. The maximum throughput is calculated as (1 - PER)* (throughput of rate), where PER denotes the packet error rate. The throughput of rate is, in this example, for BPSK equal to 12 Mbps, QPSK equal to 24 Mbps, 16 QAM equal to 48 Mbps, 64QAM equal to 72 Mbps. The solid lines depict results for one transmitter branch and dashed lines for two transmit branches. The envelope of the curves (highlighted by the line 810) is the rate selected by the data rate selection scheme. It is clear from FIG. 8 that only for very low SNR values the one transmitter cases are chosen and for higher SNR values the two transmitter cases are selected.

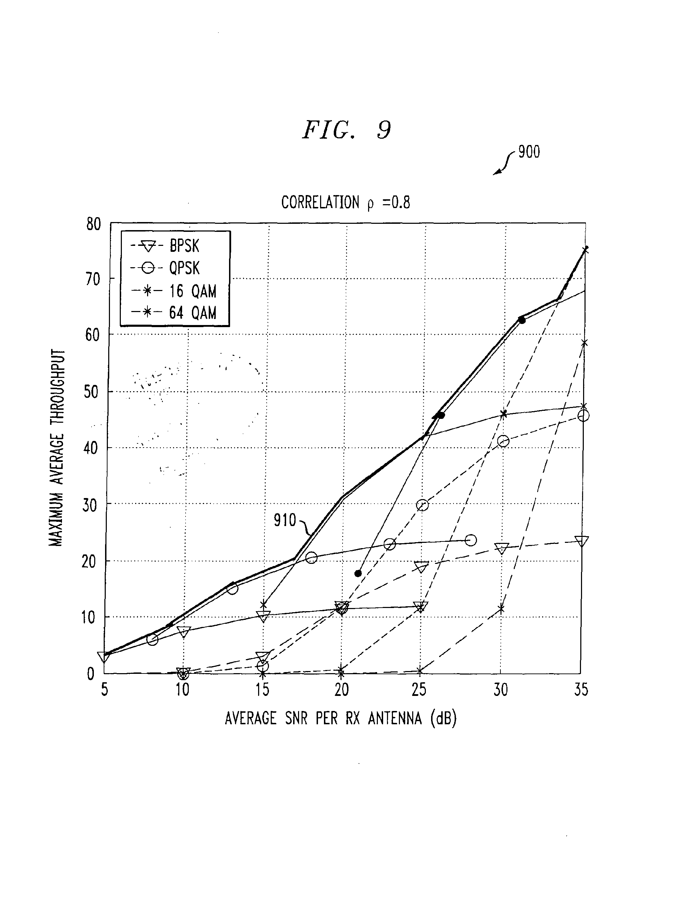

FIG. 9 illustrates the same results, for a correlation, $\rho$, equal to 0.8, where the performance for the two transmitter branch cases is severely degraded. Hereto, the data rate selection algorithm always selects a rate corresponding to the one transmitter branch cases up to an SNR of 33 dB, where it chooses the two transmitter 16QAM rate.

It is to be understood that the embodiments and variations shown and described herein are merely illustrative of the principles of this invention and that various modifications may be implemented by those skilled in the art without departing from the scope and spirit of the invention.

**Claims**

1. A wireless communication device, comprising:

a data rate controller that adapts a transmission rate of transmitted data based on a measure of channel correlation.

2. The wireless communication device of claim 1, wherein said data rate controller further adapts said transmission rate based on current link information.

3. The wireless communication device of claim 1, wherein said transmission rate defines one or more of a number of antennas transmitting independent data streams, a modulation type, a constellation size and a coding rate.

4. The wireless communication device of claim 1, wherein said data rate controller adapts said transmission rate based on an anticipated signal quality for a next frame transmission.

5. The wireless communication device of claim 1, wherein said data rate controller adapts said transmission rate based on data rate advice that decreases a data rate if a current signal quality is below a minimum required signal quality for a given data rate.

6. The wireless communication device of claim 1, wherein said data rate controller adapts said transmission rate based on data rate advice that increases a data rate if a current signal quality is above a minimum required signal quality for a given data rate.

7. A method, comprising the steps of:

transmitting one or more frames of data; and adapting a transmission rate of said data based on a measure of channel correlation.

8. The method of claim 7, wherein said adapting step further adapts said transmission rate based on current link information.

**9.** The method of claim 7, wherein said transmission rate defines one or more of a number of antennas transmitting independent data streams, a modulation type, a constellation size and a coding rate.

**10.** The method of claim 7, wherein said adapting step adapts said transmission rate based on an anticipated signal quality for a next frame transmission or based on data rate advice that decreases a data rate if a current signal quality is below a minimum required signal quality for a given data rate and increases a data rate if a current signal quality is above a minimum required signal quality for a given data rate.

## FIG. 1
PRIOR ART

WIRED DISTRIBUTION NETWORK  105

100

ACCESS POINT  120

200-1  STATION

200-2  STATION

· · ·

200-N  STATION

## FIG. 2
PRIOR ART

200

$S_1$ — TX 1 — 210-1

$S_2$ — TX 2 — 210-2

$S_{N_t}$ — TX $N_t$ — 210-$N_t$

215-1 — RX 1 — $X_1$

215-2 — RX 2 — $X_2$

215-$N_r$ — RX $N_r$ — $X_{N_r}$

## FIG. 3

## FIG. 4

400

FIG. 5

FIG. 6

## FIG. 7

700

| CORRELATION ρ\n\nSNR | 0 | 0.3 | 0.6 | 1 |
|---|---|---|---|---|
| 5 | 2TX, RATE a => 12 Mbps | 2TX, RATE a => 12 Mbps | 1TX, RATE a => 6 Mbps | 1TX, RATE a => 6 Mbps |
| 10 | 2TX, RATE c => 24 Mbps | 2TX, RATE b => 18 Mbps | 1TX, RATE c => 12 Mbps | 1TX, RATE c => 12 Mbps |
| 15 | 2TX, RATE e => 48 Mbps | 2TX, RATE d => 36 Mbps | 2TX, RATE c => 24 Mbps | 1TX, RATE e => 24 Mbps |
| 20 | 2TX, RATE f => 72 Mbps | 2TX, RATE e => 48 Mbps | 2TX, RATE d => 36 Mbps | 1TX, RATE f => 36 Mbps |
| 25 | 2TX, RATE h => 108 Mbps | 2TX, RATE f => 72 Mbps | 1TX, RATE h => 54 Mbps | 1TX, RATE h => 54 Mbps |
| 30 | 2TX, RATE h => 108 Mbps | 2TX, RATE g => 96 Mbps | 2TX, RATE f => 72 Mbps | 1TX, RATE h => 54 Mbps |

## FIG. 8

NO CORRELATION

800

*FIG. 9*

900